# EUROPEAN PATENT APPLICATION

(11) **EP 4 718 274 A1**
(43) Date of publication of application: **01.04.2026**
(21) Application number: 24835032.4
(22) Date of filing: 17.01.2024
(51) Int. Cl.: G06F 16/242

(54) **STRUCTURED QUERY LANGUAGE (SQL) DEFENSE METHOD AND SYSTEM, AND COMPUTING DEVICE**

(30) Priority: 04.07.2023 CN 202310813133; 04.08.2023 CN 202310980456
(71) Applicant: Huawei Cloud Computing Technologies Co., Ltd., Guiyang, Guizhou, 550025 (CN)
(72) Inventor: WU, Wenbo, Guiyang, Guizhou 550025 (CN); ZHAO, Shengtao, Guiyang, Guizhou 550025 (CN); WU, Dingmei, Guiyang, Guizhou 550025 (CN)
(74) Representative: Goddar, Heinz J.
(86) International application number: PCT/CN2024/072812
(87) International publication number: WO 2025/007543

(57) **Abstract**

An SQL defense method and system, and a computing device are provided. The method includes: An SQL defense rule configuration unit configures corresponding SQL defense rules for a plurality of SQL engines through a unified entrance, where each SQL defense rule includes an effective SQL engine and a corresponding execution action, and the SQL defense rules corresponding to the plurality of SQL engines have a same format; and the SQL defense rule configuration unit sends each configured SQL defense rule to a corresponding SQL engine based on the effective SQL engine in each SQL defense rule, so that the SQL engine performs defense on a received SQL statement according to the obtained SQL defense rule. In this way, the method can enhance flexibility and scalability of SQL defense.

## Description

This application claims priorities to Chinese Patent Application No. 202310813133.X, filed on July 4, 2023 and entitled "SQL DEFENSE METHOD AND SYSTEM", and to Chinese Patent Application No. 202310980456.8, filed on August 4, 2023 and entitled "STRUCTURED QUERY LANGUAGE SQL DEFENSE METHOD AND SYSTEM, AND COMPUTING DEVICE", both of which are incorporated herein by reference in their entireties.

### TECHNICAL FIELD

This application relates to the database field, and more specifically, to a structured query language SQL defense method and system, and a computing device.

### BACKGROUND

In a current structured query language (structured query language, SQL) engine, data query services are provided for users by executing SQL statements of the users. With development of technologies, SQL engines keep emerging. While the SQL engines offer people a diversity of solutions, some problems are also exposed. For example, quality of SQL statements input by the users varies, and low-quality SQL statements cause unpredictable impact on a platform or system. Large or bad SQL statements may cause system breakdown, leading to the service being unavailable. Slow SQL statements affect system stability, and this is mainly manifested as that a thread pool of a server is fully occupied, causing an avalanche effect, and other normal SQL failing to be normally executed. Consequently, a phenomenon of system suspension occurs.

In related technical solutions, parsing and defense of SQL statements are performed at a service layer. Because the SQL statement is parsed and determined at the service layer, a service procedure at the service layer needs to be reconstructed. In addition, because the SQL statement needs to be parsed and determined at the service layer, SQL statements satisfying a requirement need to be sent to the SQL engine. When processing the SQL statement, the SQL engine also needs to parse the SQL statement again, causing a high performance loss. Furthermore, each SQL engine parses and performs defense on the SQL statement according to an SQL syntax of the SQL engine. Consequently, both flexibility and scalability are poor, and universality of the SQL syntax is insufficient.

Therefore, how to enhance flexibility and scalability of SQL defense becomes a technical problem that urgently needs to be resolved.

### SUMMARY

This application provides a structured query language SQL defense method and system, and a computing device. The method can enhance flexibility and scalability of SQL defense.

According to a first aspect, a structured query language SQL defense method is provided, where the method is applied to an SQL defense system, and the SQL defense system includes an SQL defense rule configuration unit and a plurality of SQL engines. The method includes: The SQL defense rule configuration unit configures corresponding SQL defense rules for the plurality of SQL engines through a unified entrance, where each SQL defense rule includes an effective SQL engine and a corresponding execution action, and the SQL defense rules corresponding to the plurality of SQL engines have a same format; and the SQL defense rule configuration unit sends each configured SQL defense rule to a corresponding SQL engine based on the effective SQL engine in each SQL defense rule, so that the SQL engine performs defense on a received SQL statement according to the obtained SQL defense rule.

In the foregoing technical solution, the SQL defense rules in the same format are configured for and delivered to the plurality of SQL engines through the unified entrance, and the SQL engine performs defense on the received SQL statement according to the obtained SQL defense rule. In this way, a service layer does not need to parse the SQL statement, and parsing and defense of the SQL statement are directly performed in the SQL engine, so that a performance loss is low. In addition, because the SQL defense rules can be configured for the plurality of SQL engines, and the SQL defense rules have the same format, flexibility, scalability, and universality of an SQL syntax are enhanced.

With reference to the first aspect, in some implementations of the first aspect, the plurality of SQL engines include a first SQL engine, and the method further includes: The first SQL engine obtains at least one corresponding SQL defense rule from the SQL defense rule configuration unit, where the at least one SQL defense rule includes a first SQL defense rule; the first SQL engine receives a first SQL statement from a service layer; and the first SQL engine executes an action in the first SQL defense rule based on the first SQL statement satisfying the first SQL defense rule.

In the foregoing technical solution, the SQL engine can autonomously perform defense on the SQL statement, to avoid unpredictable impact caused by a low-quality SQL statement on a big data analytics and processing platform or a database, so that the defense is more accurate. In addition, because the SQL statement is directly parsed in the SQL engine first, the SQL statement does not need to be parsed at the service layer, so that the performance loss is low, there is no reconstruction at the service layer, and implementation is easy.

With reference to the first aspect, in some implementations of the first aspect, the SQL defense rule configuration unit automatically sends each configured SQL defense rule to the corresponding SQL engine in a loading periodicity based on the effective SQL engine in each SQL defense rule.

In the foregoing technical solution, each configured SQL defense rule is automatically sent to the corresponding SQL engine in the loading periodicity. In this way, the SQL engine can automatically load the SQL defense rule in the loading periodicity without restarting the SQL engine or interrupting a service.

With reference to the first aspect, in some implementations of the first aspect, the SQL defense rule includes a hint-type SQL defense rule, an intercept-type SQL defense rule, or a fuse-type SQL defense rule.

With reference to the first aspect, in some implementations of the first aspect, the first SQL defense rule is the hint-type SQL defense rule, and the first SQL engine continues executing the first SQL statement.

With reference to the first aspect, in some implementations of the first aspect, the method further includes: The first SQL engine displays hint information of the first SQL statement to a user.

In the foregoing technical solution, the hint information of the first SQL statement can be displayed to the user via a client, to improve interaction experience of the user.

With reference to the first aspect, in some implementations of the first aspect, the first SQL defense rule is the intercept-type SQL defense rule or the fuse-type SQL defense rule, and the first SQL engine stops executing the first SQL statement.

With reference to the first aspect, in some implementations of the first aspect, the method further includes: The first SQL engine displays, to a user, a reason why execution of the first SQL statement is stopped.

In the foregoing technical solution, the reason why the execution of the first SQL statement is stopped can be displayed to the user via a client, to improve interaction experience of the user.

With reference to the first aspect, in some implementations of the first aspect, the first SQL engine automatically loads the at least one SQL defense rule in a loading periodicity.

In the foregoing technical solution, the SQL engine may automatically load the SQL defense rule in the loading periodicity, without restarting the SQL engine or interrupting a service.

With reference to the first aspect, in some implementations of the first aspect, the SQL defense rule further includes an effective tenant list and a rule identifier ID.

According to a second aspect, a structured query language SQL defense system is provided. The system includes an SQL defense rule configuration unit and a plurality of SQL engines; the SQL defense rule configuration unit is configured to configure corresponding SQL defense rules for the plurality of SQL engines through a unified entrance, where each SQL defense rule includes an effective SQL engine and a corresponding execution action, and the SQL defense rules corresponding to the plurality of SQL engines have a same format; and the SQL defense rule configuration unit is further configured to send each configured SQL defense rule to a corresponding SQL engine based on the effective SQL engine in each SQL defense rule, so that the SQL engine performs defense on a received SQL statement according to the obtained SQL defense rule.

With reference to the second aspect, in some implementations of the second aspect, the plurality of SQL engines include a first SQL engine. The first SQL engine is configured to obtain at least one corresponding SQL defense rule from the SQL defense rule configuration unit, where the at least one SQL defense rule includes a first SQL defense rule; the first SQL engine is further configured to receive a first SQL statement from a service layer; and the first SQL engine is further configured to execute an action in the first SQL defense rule based on the first SQL statement satisfying the first SQL defense rule.

With reference to the second aspect, in some implementations of the second aspect, the SQL defense rule configuration unit is specifically configured to automatically send each configured SQL defense rule to the corresponding SQL engine in a loading periodicity based on the effective SQL engine in each SQL defense rule.

With reference to the second aspect, in some implementations of the second aspect, the SQL defense rule includes a hint-type SQL defense rule, an intercept-type SQL defense rule, or a fuse-type SQL defense rule.

With reference to the second aspect, in some implementations of the second aspect, the first SQL defense rule is the hint-type SQL defense rule, and the first SQL engine is specifically configured to continue executing the first SQL statement.

With reference to the second aspect, in some implementations of the second aspect, the first SQL engine is further configured to display hint information of the first SQL statement to a user.

With reference to the second aspect, in some implementations of the second aspect, the first SQL defense rule is the intercept-type SQL defense rule or the fuse-type SQL defense rule, and the first SQL engine is specifically configured to stop executing the first SQL statement.

With reference to the second aspect, in some implementations of the second aspect, the first SQL engine is further configured to display, to a user, a reason why execution of the first SQL statement is stopped.

With reference to the second aspect, in some implementations of the second aspect, the first SQL engine automatically loads the at least one SQL defense rule in a loading periodicity.

With reference to the second aspect, in some implementations of the second aspect, the SQL defense rule further includes an effective tenant list and a rule identifier ID.

According to a third aspect, a computing device cluster is provided, and includes at least one computing device. Each computing device includes a processor and a storage; and a processor of the at least one computing device is configured to execute instructions stored in a storage of the at least one computing device, to cause the computing device cluster to perform the method according to any one of the first aspect or the possible implementations of the first aspect.

Optionally, the processor may be a general-purpose processor, and may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the storage. The storage may be integrated into the processor, or may be located outside the processor and exist independently.

According to a fourth aspect, a chip is provided. The chip obtains instructions and executes the instructions to implement the method in any one of the first aspect or the implementations of the first aspect.

Optionally, in an implementation, the chip includes a processor and a data interface. The processor reads, through the data interface, instructions stored in a storage, to perform the method in any one of the first aspect or the implementations of the first aspect.

Optionally, in an implementation, the chip may further include the storage. The storage stores the instructions. The processor is configured to execute the instructions stored in the storage. When the instructions are executed, the processor is configured to perform the method in any one of the first aspect or the implementations of the first aspect.

According to a fifth aspect, a computer program product including instructions is provided. When the instructions are run by a computing device cluster, the computing device cluster is caused to perform the method in any one of the first aspect or the implementations of the first aspect.

According to a sixth aspect, a computer-readable storage medium is provided, and includes computer program instructions. When the computer program instructions are executed by a computing device cluster, the computing device cluster performs the method in any one of the first aspect or the implementations of the first aspect.

In an example, the computer-readable storage medium includes, but is not limited to, one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the storage medium may be specifically a non-volatile storage medium.

### BRIEF DESCRIPTION OF DRAWINGS

FIG. 1 is a block diagram of a cloud scenario applicable to an embodiment of this application;
FIG. 2 is a block diagram of an SQL defense system according to an embodiment of this application;
FIG. 3 is a diagram of classification of SQL defense rules according to an embodiment of this application;
FIG. 4 is a schematic flowchart of an SQL statement defense method according to an embodiment of this application;
FIG. 5 is a diagram of a template that is of SQL defense rules available for selection and that is provided by a defense rule unified-definition unit 231 for a system administrator according to an embodiment of this application;
FIG. 6 is a diagram in which an administrator configures an effective SQL defense rule for an SQL engine according to an embodiment of this application;
FIG. 7 is a diagram of configuration files that are of SQL defense rules and that are for an SQL engine to read according to an embodiment of this application;
FIG. 8 is a schematic flowchart of another SQL statement defense method according to an embodiment of this application;
FIG. 9 is a schematic flowchart in which an SQL defense rule definition and management system 230 delivers a configuration file of an SQL defense rule to an SQL engine according to an embodiment of this application;
FIG. 10 is a schematic flowchart in which an SQL engine parses and performs defense on a received SQL statement according to an embodiment of this application;
FIG. 11 is a block diagram of an SQL defense system 1000 according to an embodiment of this application;
FIG. 12 is a diagram of an architecture of a computing device 1500 according to an embodiment of this application;
FIG. 13 is a diagram of an architecture of a computing device cluster according to an embodiment of this application; and
FIG. 14 is a diagram of connection between computing devices 1500A and 1500B via a network according to an embodiment of this application.

### DESCRIPTION OF EMBODIMENTS

The following describes technical solutions of this application with reference to accompanying drawings.

Each aspect, embodiment, or feature is presented in this application with reference to a system including a plurality of devices, components, modules, and the like. It should be understood and appreciated that, each system may include another device, component, module, and the like, and/or may not include all devices, components, modules, and the like discussed with reference to the accompanying drawings. Furthermore, a combination of these solutions may also be used.

In addition, in embodiments of this application, words such as "example" and "for example" are used for representing giving an example, an illustration, or a description. Any embodiment or design solution described as an "example" in this application should not be construed as being more preferred or having more advantages than another embodiment or design solution. Exactly, the term "example" is used for presenting a concept in a specific manner.

In embodiments of this application, "corresponding, relevant (corresponding, relevant)" and "corresponding (corresponding)" sometimes is interchangeably used. It should be noted that, meanings expressed by the terms are consistent when differences of the terms are not emphasized.

Service scenarios described in embodiments of this application are intended to more clearly describe the technical solutions in embodiments of this application, and does not constitute a limitation on the technical solutions provided in embodiments of this application. A person of ordinary skill in the art may learn that, with evolution of network architectures and emergence of new service scenarios, the technical solutions provided in embodiments of this application are also applicable to similar technical problems.

Reference to "an embodiment", "some embodiments", or the like described in this specification means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "comprise", "have", and variations thereof all mean "including but not limited to", unless otherwise specifically emphasized in another manner.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and
only B exists, where A and B may be singular or plural. The character "/" generally indicates an "or" relationship between the associated objects. "At least one item (piece) of the following" or a similar expression thereof means any combination of these items, including a singular item (piece) or
any combination of a plurality of items (pieces). For example, at least one item (piece) of a, b, or c may indicate: a, b, c, a-b, a-c, b-c, or a-b-c, where a, b, and c may be singular or plural.

For ease of description, the following first explains and describes concepts in embodiments of this application.

### 1. Overload

Overload refers to a state in which a system cannot provide services in time because a concurrent input of the system exceeds a rated capacity of the system. Usually, a ratio of actual service request data to a rated specification service request quantity is used for description, for example, 3x load, 10x load, or 30x load.

### 2. Overload protection

Overload is a broad term, and can mean that an electrical device is excessively loaded, an object is subject to an excessive force, or a service request quantity of a software service exceeds design specifications of the software service. Protection provided for these behaviors that exceed "load" is collectively referred to as overload protection.

### 3. Overload control

Overload control, also referred to as flow control, refers to a control process in which
a system is caused to ensure successful processing of some or all services with a rated capacity through means such as flow control, degradation, fuse, isolation, and elastic scaling when the system is in an overloaded state.

### 4. Structured query language (structured query language, SQL) interception

SQL interception is an emerging, high-speed, and lightweight security protection technology, and static and dynamic security monitoring is performed before and after SQL is submitted to a database/an SQL engine, to help defend against potential security threats. A common SQL interception method is that security review at an SQL statement level is performed, and once a malicious statement is found, the malicious statement can be prevented in time from continuing to be submitted or executed.

### 5. SQL fuse

An SQL statement occupies too many resources, and resources on all nodes or a single node are used to a high watermark, causing various problems due to inefficient computing resources or storage resources. SQL fuse is a self-overload protection means of a database/an SQL engine, is generally a practice for retaining key services by stopping, when overall resources are about to be exhausted, executing some SQL statements, and is generally considered from a perspective of overall load.

In a current SQL engine, data query services are provided for users by executing SQL statements of the users. With development of technologies, SQL engines keep emerging. While the SQL engines offer people a diversity of solutions, some problems are also exposed. For example, quality of SQL statements input by the users varies, and low-quality SQL statements cause unpredictable impact on a platform or system. Large or bad SQL statements may cause system breakdown, leading to the service being unavailable. Slow SQL statements affect system stability, and this is mainly manifested as that a thread pool of a server is fully occupied, causing an avalanche effect, and other normal SQL failing to be normally executed. Consequently, a phenomenon of system suspension occurs.

Therefore, how to defend against low-quality SQL statements input by users becomes a technical problem that urgently needs to be resolved.

In related technical solutions, each SQL engine performs parsing and defense on SQL statements at a service layer on the SQL engine. Because the SQL statement is parsed and determined at the service layer, a service procedure at the service layer needs to be reconstructed. In addition, because the SQL statement needs to be parsed and determined at the service layer, SQL statements satisfying a requirement need to be sent to the SQL engine. When processing the SQL statement, the SQL engine also needs to parse the SQL statement again, causing a high performance loss. Furthermore, each SQL engine parses and performs defense on the SQL statement according to an SQL syntax of the SQL engine. Consequently, both flexibility and scalability are poor, and universality of the SQL syntax is insufficient.

In view of this, embodiments of this application provide an SQL defense method. SQL defense rules in a same format are configured for and delivered to a plurality of SQL engines through a unified entrance, and the SQL engine performs defense on a received SQL statement according to the obtained SQL defense rule. In this way, the service layer does not need to parse the SQL statement, and parsing and defense of the SQL statement are directly performed in the SQL engine, so that the performance loss is low. In addition, because the SQL defense rules can be configured for the plurality of SQL engines, and the SQL defense rules have the same format, the flexibility, the scalability, and the universality of the SQL syntax are enhanced.

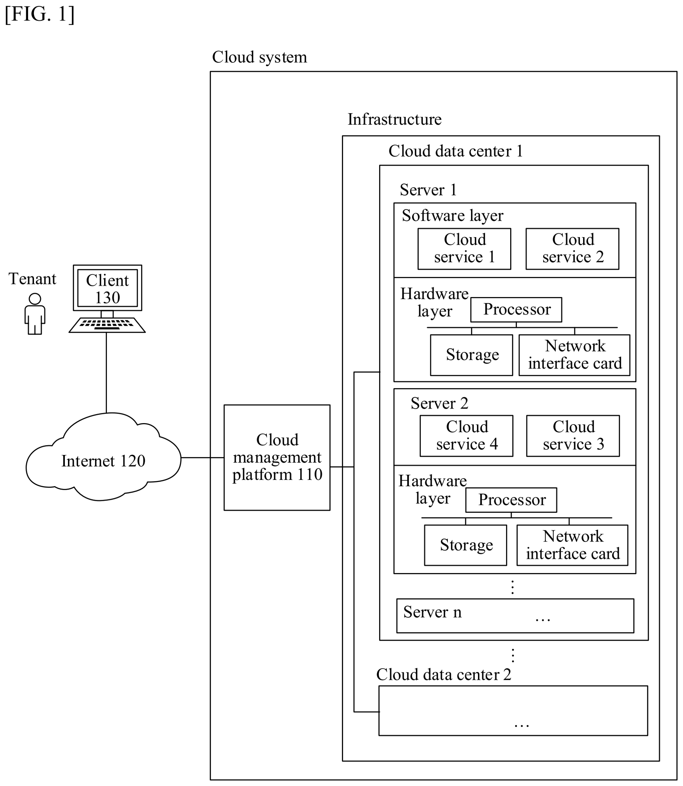

In a possible implementation, the method provided in embodiments of this application may be applied to a cloud service scenario, and a cloud management platform in the cloud service scenario performs the method. For ease of description, the following first describes in detail the cloud service scenario with reference to FIG. 1.

FIG. 1 is a block diagram of a cloud scenario applicable to an embodiment of this application. As shown in FIG. 1, the cloud scenario may include a cloud management platform 110, an internet 120, and a client 130.

As shown in FIG. 1, the cloud management platform 110 is configured to manage an infrastructure that provides a plurality of cloud services. The infrastructure includes a plurality of cloud data centers, each cloud data center includes a plurality of servers, and each server includes cloud service resources, to provide corresponding cloud services for tenants.

The cloud management platform 110 may be located in the cloud data center, and may provide an access interface (for example, an interface or an application programming interface (application programming interface, API)). The tenant may perform an operation on the client 130 to remotely access the access interface, to register a cloud account and password on the cloud management platform 110, and log in to the cloud management platform 110. After the cloud management platform 110 successfully authenticates the cloud account and password, the tenant may further pay on the cloud management platform 110 to select and purchase a virtual machine with a specific specification (of a processor, a memory, or a disk). After the payment for purchase succeeds, the cloud management platform 110 provides a remote login account and password of the purchased virtual machine. The client 130 may remotely log in to the virtual machine, and install and run an application of the tenant in the virtual machine. Therefore, the tenant may create, manage, log in to, and operate the virtual machine in the cloud data center by using the cloud management platform 110. The virtual machine may also be referred to as a cloud server (elastic compute service, ECS) or an elastic instance (where different cloud service providers have different names).

It should be understood that, tenants of the cloud services may be individuals, enterprises, schools, hospitals, administrative agencies, or the like.

Functions of the cloud management platform 110 include, but are not limited to, a user console, a computing management service, a network management service, a storage management service, an authentication service, and an image management service. The user console provides an interface or an API to interact with the tenant. The computing management service is used for managing servers running a virtual machine and a container and a bare metal server. The network management service is used for managing network services (for example, a gateway and a firewall). The storage management service is used for managing a storage service (for example, a data bucket service). The authentication service is used for managing a tenant account and password. The image management service is used for managing a virtual machine image. The tenant may log in to the cloud management platform 110 via the internet 120 by using the client 130 to manage a leased cloud service.

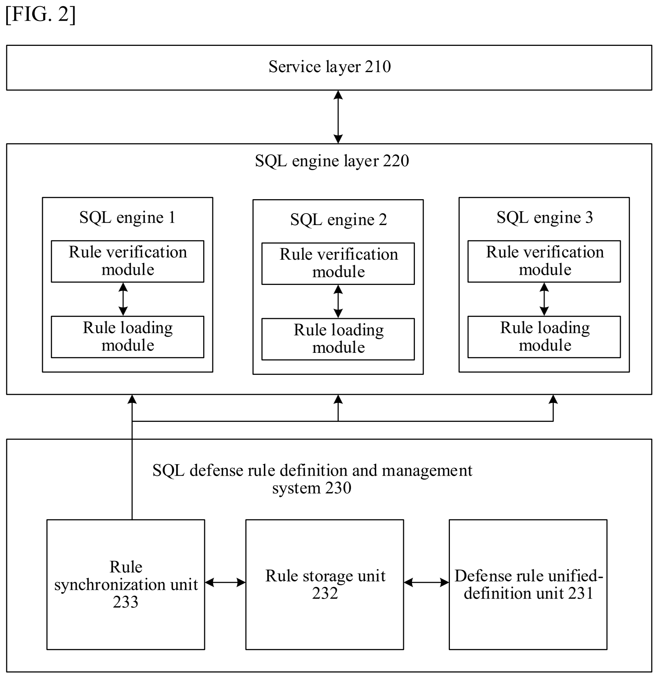

FIG. 2 is a block diagram of an SQL defense system according to an embodiment of this application. As shown in FIG. 2, the system includes a service layer 210, an SQL engine layer 220, and an SQL defense rule definition and management system 230. The following separately describes functions of each part in detail.

The SQL defense rule definition and management system 230 includes: a defense rule unified-definition unit 231, a rule storage unit 232, and a rule synchronization unit 233. The defense rule unified-definition unit 231 is used by a system administrator to define SQL defense rules of all SQL engines. The rule storage unit 232 is configured to store the SQL defense rules of the SQL engines. The rule synchronization unit 233 is configured to automatically and periodically synchronize the SQL defense rules to corresponding SQL engines at the SQL engine layer 220 in the background, and an automatic synchronization periodicity may be set.

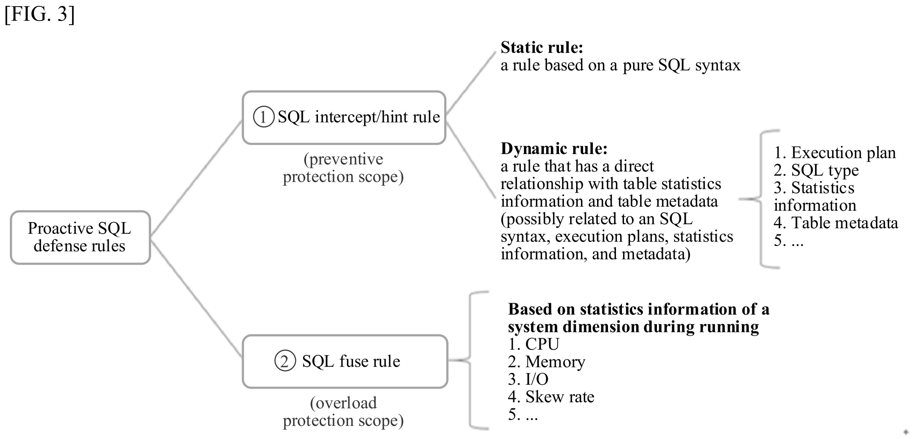

In this embodiment of this application, as shown in FIG. 3, the SQL defense rule may be classified into an SQL defense rule in a preventive protection scope and an SQL defense rule in an overload protection scope. The SQL defense rule in the preventive protection scope may include, but is not limited to, an intercept-type SQL defense rule and a hint-type SQL defense rule. The SQL defense rule in the overload protection scope may include, but is not limited to, a fuse-type SQL defense rule. The following describes in detail the foregoing various types of SQL defense rules.

In an example, the intercept-type/hint-type SQL defense rule includes a static rule and a dynamic rule. The static rule is a pure SQL syntax rule, and the dynamic rule is a type of rule related to information such as table statistics information, table metadata, execution plans, and SQL types.

For example, the static rule may include, but is not limited to, the following specific rules:
static_0001 - A quantity of occurrences of count(distinct) in SQL exceeds a specified limit value.
static_0002 - Using a Not in <Subquery> statement may cause slow SQL.
static_0003 - A quantity of times of join in SQL exceeds a limit.
static_0004 - A quantity of times of union all in SQL exceeds a limit.
static_0005 - A quantity of nested subquery layers exceeds a limit.
static_0006 - A length of an SQL string exceeds a limit.
static_0007 - A Cartesian product exists when a plurality of tables are associated.
static_0008 - Perform an alter table update/delete operation at a cluster level (on cluster).
static_0009 - Perform an alter table add/delete column operation at a cluster level (on cluster).
static_0010 - Perform an optimize final operation at a cluster level (on cluster).
static_0011 - When a distributed table is created, a sub-table is the distributed table.

For example, the dynamic rule may include, but is not limited to, the following specific rules:
dynamic_0001 - A quantity of scanned files exceeds a limit.
dynamic_0002 - A quantity of partitions related to execution of a delete or alter cascade operation exceeds a limit.

In another example, the fuse-type SQL defense rule is a type of rule determined based on statistics information of a system dimension during running. The statistics information of the system dimension may include, but is not limited to, a CPU, a memory, an I/O, a skew rate, and the like.

For example, the fuse-type SQL defense rule may include, but is not limited to, the following specific rules:
running_0001 - A quantity of rows in a result returned to a client for a select-type SQL statement exceeds a limit.
running_0002 - A quantity of actual partitions read by the SQL engine from a single table exceeds a limit.
running_0003 - A memory peak occupied by SQL exceeds a limit.
running_0004 - Duration for which SQL has already run exceeds a limit.
running_0004 - Duration for which SQL has already run exceeds a limit.

The SQL engine layer 220 may include a plurality of SQL engines (where three SQL engines are used as an example for description in FIG. 2). Each SQL engine may include a rule loading module and a rule verification module. The rule loading module is configured to automatically and periodically load, into an engine process memory, a configuration of an SQL defense rule synchronized by the rule synchronization unit 233, and the SQL defense rule configuration takes effect for an SQL execution procedure. The rule verification module is configured to compare content of an input SQL statement with each SQL defense rule, and trigger a corresponding action defined in the rule if it is found that a defense standard is satisfied.

For example, the SQL engines included at the SQL engine layer 220 may include, but are not limited to, a hive engine, a hetuengine engine, a spark engine, a presto engine, a MySQL engine, a gaussDB engine, a DWS engine, a clickhouse engine, and the like. In FIG. 2, an example in which the SQL engine layer 220 includes the hive engine, the hetuengine engine, and the DWS engine is used for display.

The service layer 210 is configured to submit, through an original SQL submission interface, an SQL statement input by a user to the corresponding SQL engine at the SQL engine layer 220.

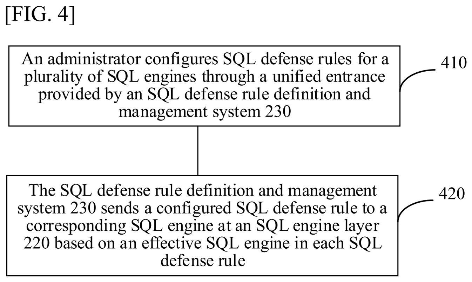

With reference to FIG. 4, the following uses the system shown in FIG. 2 as an example to describe in detail, an SQL statement defense method provided in an embodiment of this application. It should be understood that, the example in FIG. 4 is merely intended to help a person skilled in the art understand embodiments of this application, but is not intended to limit embodiments of this application to examples of specific values or specific scenarios in FIG. 4. It is clear that a person skilled in the art can make various equivalent modifications or variations based on the following example provided in FIG. 4, and such modifications and variations also fall within the scope of embodiments of this application.

FIG. 4 is a schematic flowchart of an SQL statement defense method according to an embodiment of this application. As shown in FIG. 4, the method includes step 410 and step 420. The following separately describes in detail step 410 and step 420.

It should be understood that, the method shown in FIG. 4 may be performed by the SQL defense rule definition and management system 230 in FIG. 2.

Step 410: An administrator configures SQL defense rules for a plurality of SQL engines through a unified entrance provided by the SQL defense rule definition and management system 230.

In an example, the system administrator may define or configure SQL defense rules of all SQL engines by using the defense rule unified-definition unit 231. There are a plurality of specific implementations. This is not specifically limited in this embodiment of this application. In a possible implementation, the defense rule unified-definition unit 231 may provide a visualization page for the system administrator, and the system administrator may define the SQL defense rules of all the engines in a one-stop manner by using the visualization page. In another possible implementation, the defense rule unified-definition unit 231 may alternatively provide a background programming/communication interface for the system administrator, and the system administrator may define the SQL defense rules of all the engines through the background programming/communication interface.

For example, the defense rule unified-definition unit 231 provides the visualization page for the system administrator. The defense rule unified-definition unit 231 may provide an interface for the system administrator, and the interface displays, for the system administrator, a template of SQL defense rules available for selection. In an example, information in the template of the SQL defense rules may include, but is not limited to, a globally unique ID of the SQL defense rule, content determined by the SQL defense rule, a list of engines supported or applicable to the SQL defense rule, a defense behavior supported by the SQL defense rule, a threshold parameter triggered by the SQL defense rule, and a reference value of the threshold parameter that is triggered by the SQL defense rule.

The defense behavior corresponding to the SQL defense rule may include, but is not limited to, hinting, interception, fusing (which may also be referred to as blocking), and service degradation. The service degradation may be understood as limiting a total quantity of computing resources available for an intercepted SQL statement, and completing execution of the SQL statement in a longer period of time. The total quantity of computing resources may include, but is not limited to, a CPU, a memory, an I/O, and the like.

It should be understood that, one SQL defense rule may correspond to at least one defense behavior. The list of engines supported or applicable to the SQL defense rule may include at least one engine. In other words, one SQL defense rule may take effect for one engine, or may simultaneously take effect for a plurality of engines.

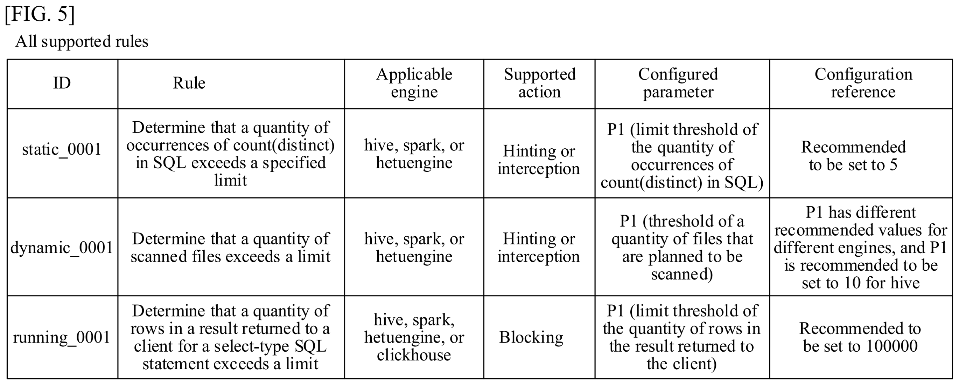

For example, FIG. 5 is an example of the template that is of the SQL defense rules available for selection and that is provided by the defense rule unified-definition unit 231 for the system administrator. For example, for an SQL defense rule whose ID is static_0001, a specific rule thereof is to determine that a quantity of occurrences of count(distinct) in SQL exceeds a specified limit value; applicable engines include hive, spark, and hetuengine; supported actions include hinting and interception; and a configured parameter includes P1 (a limit threshold of the quantity of occurrences of count(distinct) in SQL), and P1 is recommended to be set to 5. For another example, for an SQL defense rule whose ID is dynamic_0001, a specific rule thereof is to determine that a quantity of scanned files exceeds a limit; applicable engines include hive, spark, and hetuengine; supported actions include hinting and interception; and a configured parameter includes P1 (a threshold of a quantity of files that are planned to be scanned), P1 has different recommended values for different engines, and P1 is recommended to be set to 10 for hive. For still another example, for an SQL defense rule whose ID is running_0001, a specific rule thereof is to determine that a quantity of rows in a result returned to a client for a select-type SQL statement exceeds a limit; applicable engines include hive, spark, hetuengine, and clickhouse; a supported action includes blocking; and a configured parameter includes P1 (a limit threshold of the quantity of rows in the result returned to the client), and P1 is recommended to be set to 100000.

In this embodiment of this application, the administrator may configure the SQL defense rules of all the SQL engines based on the template that is of the SQL defense rules available for selection and that is provided by the defense rule unified-definition unit 231. Specifically, the administrator may define an effective scope of the SQL defense rule at engine and tenant levels. One rule may be selected to simultaneously take effect for a plurality of engines, and a plurality of "defense actions" and trigger thresholds can be simultaneously configured in one rule.

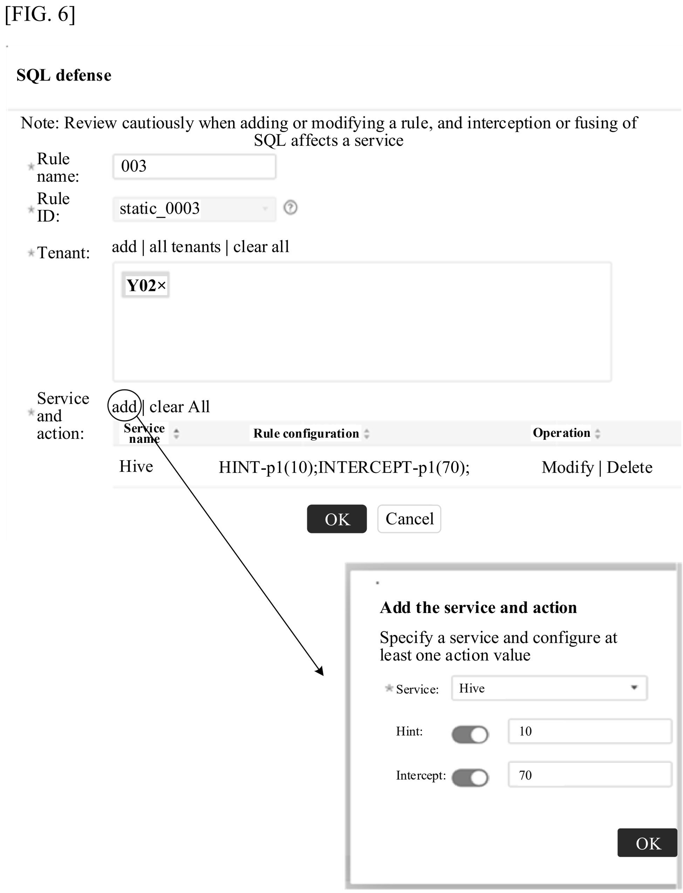

For example, FIG. 6 is an example of an interface of effective SQL defense rules that are configured by the administrator for the SQL engine. As shown in FIG. 6, the administrator can select a specific SQL defense rule by using such a visualization page, and select a tenant that uses the rule. The administrator can also click "add" on the visualization page to display an "Add a service and an action" interface. In the interface, the administrator selects an engine that uses the rule, and can also set a trigger threshold corresponding to a defense action of the selected SQL defense rule (for example, hinting or interception).

Step 420: The SQL defense rule definition and management system 230 sends a configured SQL defense rule to a corresponding SQL engine at the SQL engine layer 220 based on an effective SQL engine in each SQL defense rule.

In this embodiment of this application, after the system administrator configures the SQL defense rules by using the SQL defense rule definition and management system 230, the SQL defense rule definition and management system 230 may send the configured SQL defense rule to the corresponding SQL engine at the SQL engine layer 220. Specifically, the rule synchronization unit 233 in the SQL defense rule definition and management system 230 may automatically and periodically synchronize the SQL defense rules to corresponding SQL engines at the SQL engine layer 220 in the background, and an automatic synchronization periodicity may be set.

In an example, an SQL defense rule configuration template in a common and general format can be agreed upon between all the SQL engines. The SQL defense rule definition and management system 230 may convert, based on the configuration template agreed upon between all the SQL engines, the SQL defense rules configured in the SQL defense rule interface into corresponding configuration files of the SQL defense rules, and the rule synchronization unit 233 automatically and periodically synchronizes the configuration file of the SQL defense rule in a general format to the corresponding SQL engine at the SQL engine layer 220 in the background.

It should be understood that, the SQL defense rule configuration template in the general format may include, but is not limited to, an ID of the SQL defense rule, an effective tenant list for the SQL defense rule, a behavior that needs to be taken and a corresponding trigger threshold used when the SQL defense rule is matched.

In the foregoing technical solution, standardized design is performed on the configuration file that is of the SQL defense rules and that is synchronized to the SQL engine. In this way, the configuration file of the SQL defense rule can be universally used between the plurality of SQL engines, and reinventing a wheel is avoided.

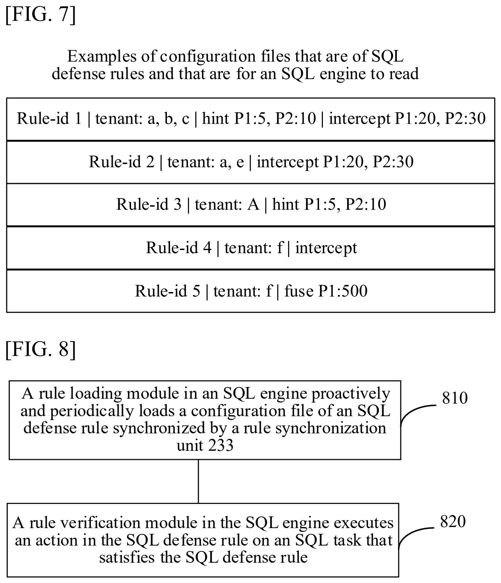

For example, as shown in FIG. 7, a configuration file that is of the SQL defense rule and that is for the SQL engine to read is Rule-id 1 | tenant: a, b, c | hint P1:5, P2:10 | intercept P1:20, P2:30; and another configuration file that is of the SQL defense rule and that is for the SQL engine to read is Rule-id 2 | tenant: a, e | intercept P1:20, P2:30; another configuration file that is of the SQL defense rule and that is for the SQL engine to read is Rule-id 3 | tenant: A | hint P1:5, P2:10; another configuration file that is of the SQL defense rule and that is for the SQL engine to read is Rule-id 4 | tenant: f | intercept; and another configuration file that is of the SQL defense rule and that is for the SQL engine to read is Rule-id 5| tenant: f | fuse P1:500.

It should be noted that, in FIG. 7, the configuration file that is of the SQL defense rule and that is for the SQL engine to read is merely an example, and specific content and a specific format of the configuration file of the SQL defense rule are not limited.

It should be understood that, in addition to using the foregoing private format, the configuration file of the SQL defense rule may alternatively use a standard data format. The standard data format may include, but is not limited to, a JS object notation (Java script object notation, JSON), YAML, and the like.

It should be further understood that, the configuration file of the SQL defense rule may be transferred in a form of a file, or may be stored in a database and exist in a form of a structured table. This is not specifically limited in this embodiment of this application.

In an example of "Rule-id 1 | tenant: a, b, c | hint P1:5, P2:10 | intercept P1:20, P2:30", "Rule-id 1" indicates an ID of the SQL defense rule, "tenant: a, b, c" indicates a tenant for which the SQL defense rule takes effect, "hint P1:5, P2:10" indicates a hint behavior that needs to be taken and a corresponding trigger threshold used when the SQL defense rule is matched, and "intercept P1:20, P2:30" indicates an intercept behavior that needs to be taken and a corresponding trigger threshold used when the SQL defense rule is matched.

It should be noted that, "|" in the configuration file of the SQL defense rule is an example of a delimiter, and another delimiter may alternatively be used. A specific form of the delimiter is not limited in this embodiment of this application.

With reference to FIG. 8, the following uses the system shown in FIG. 2 as an example to describe in detail another SQL statement defense method provided in an embodiment of this application. It should be understood that, the example in FIG. 8 is merely intended to help a person skilled in the art understand embodiments of this application, but is not intended to limit embodiments of this application to examples of specific values or specific scenarios in FIG. 8. It is clear that a person skilled in the art can make various equivalent modifications or variations based on the following example provided in FIG. 8, and such modifications and variations also fall within the scope of embodiments of this application.

FIG. 8 is a schematic flowchart of another SQL statement defense method according to an embodiment of this application. As shown in FIG. 8, the method includes step 810 and step 820. The following separately describes in detail step 810 and step 820.

It should be understood that, the method shown in FIG. 8 may be performed by an SQL engine at the SQL engine layer 220 in FIG. 2.

Step 810: A rule loading module in the SQL engine proactively and periodically loads a configuration file of an SQL defense rule synchronized by the rule synchronization unit 233.

In this embodiment of this application, each SQL engine at the SQL engine layer 220 includes the rule loading module. The rule loading module may periodically and dynamically update the configuration file of the SQL defense rule on a premise that the system supports carrying service load. After the configuration file of the SQL defense rule is loaded and takes effect, a new version of SQL defense rules can be applied to a next SQL statement.

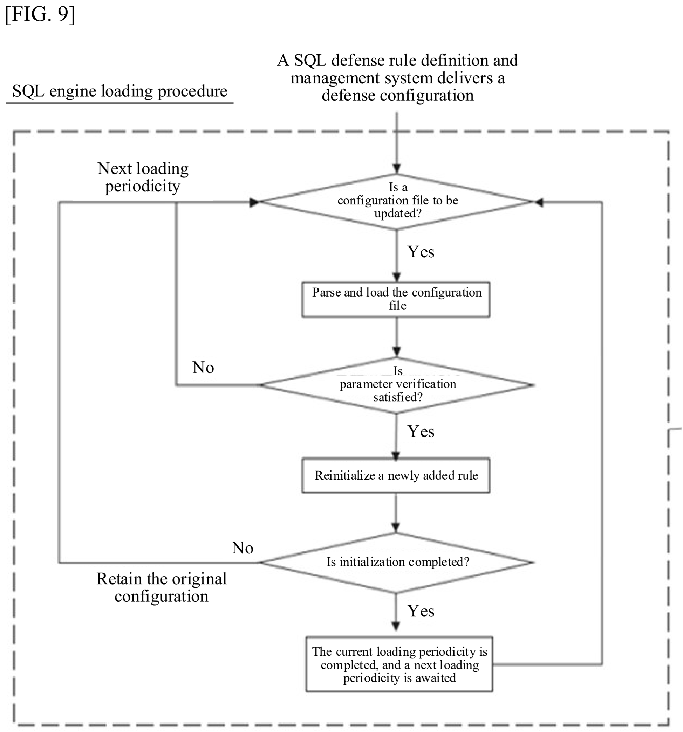

Specifically, in a possible implementation, as shown in FIG. 9, the SQL defense rule definition and management system 230 delivers the configuration file of the SQL defense rule to the SQL engine. In a case, if the rule loading module in the SQL engine supports update of the configuration file of the SQL defense rule, the rule loading module parses and loads the configuration file of the SQL defense rule, and when parameter verification is satisfied, newly adds the SQL defense rule and completes initialization. In this case, the current loading periodicity is completed, and a next loading periodicity is awaited. In another case, if the rule loading module in the SQL engine does not support the update of the configuration file of the SQL defense rule, the rule loading module determines, in a next loading periodicity, whether the update of the configuration file of the SQL defense rule is supported. In the another case, if the foregoing parameter verification is not satisfied, a next loading periodicity is awaited. In the another case, if the initialization is not completed after the SQL defense rule is newly added, an original configuration is retained, and a next loading periodicity is awaited.

Step 820: A rule verification module in the SQL engine executes an action in the SQL defense rule on an SQL statement that satisfies the SQL defense rule.

In this embodiment of this application, after receiving an SQL statement that is sent by a client (which may also be referred to as an SQL statement), the SQL engine may determine, based on the loaded SQL defense rule, whether there is an SQL statement that satisfies a condition, and perform a corresponding action on the SQL statement that satisfies the condition.

It should be understood that, based on an action in the configuration file of the SQL defense rule, the SQL defense rule may be classified as a hint-type SQL defense rule, an intercept-type SQL defense rule, or a fuse-type SQL defense rule.

It should be noted that, if an SQL statement satisfies a trigger threshold of either the intercept-type SQL defense rule or the fuse-type SQL defense rule, an execution procedure of the current SQL statement immediately ends. If an SQL statement satisfies the hint-type SQL defense rule, an execution procedure of the SQL statement is not interrupted.

Optionally, in this embodiment of this application, a result of SQL statement defense may be further exchanged with the client. For example, for the SQL statement that satisfies the intercept-type SQL defense rule, execution of the SQL statement is directly terminated, and a reason for interception is displayed on the client. For another example, for the SQL statement that satisfies the hint-type SQL defense rule, execution of the SQL statement is continued, and a warm reminder is displayed on the client, to be specific, hint information for the SQL statement is displayed on the client.

In the foregoing technical solution, the SQL engine performs autonomous understanding and SQL overload control, so that the defense is more accurate, a performance loss is low, there is no reconstruction of a service, and implementation is easy. In addition, because the SQL statement defense is performed on the SQL engine, an original SQL service submission procedure and interface do not need to be reconstructed, and impact on performance of an original SQL service is low.

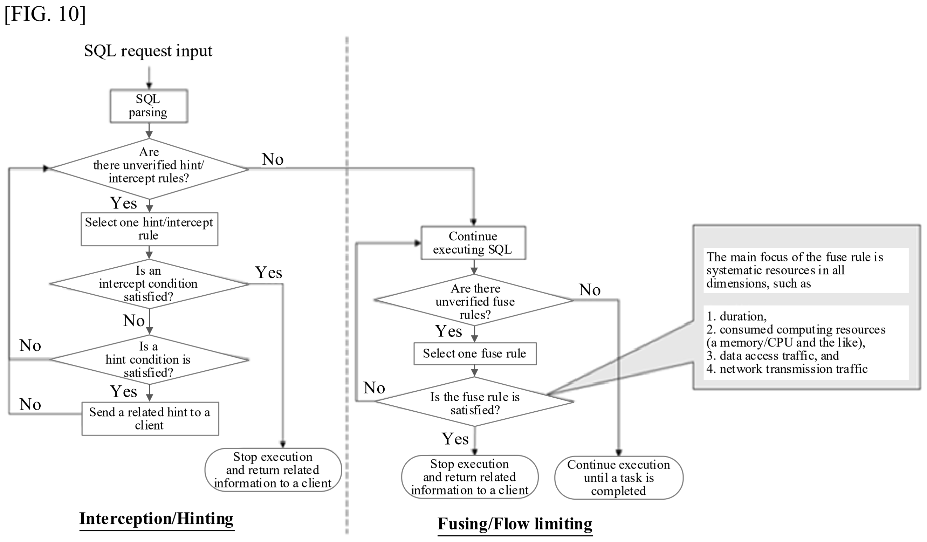

For example, as shown in FIG. 10, after receiving an SQL statement, the SQL engine parses the SQL statement. In an example, if there are unverified hint-type SQL defense rules or intercept-type SQL defense rules in loaded SQL defense rules, the SQL engine selects one hint-type SQL defense rule or an intercept-type SQL defense rule. If an SQL statement satisfies an intercept condition in the intercept-type SQL defense rule, the SQL engine stops executing the SQL statement, and returns related information to the client. If the SQL statement does not satisfy the intercept condition in the intercept-type SQL defense rule, whether a hint condition in the hint-type SQL defense rule is satisfied continues to be determined. If the hint condition in the hint-type SQL defense rule is satisfied, the SQL engine continues executing the SQL statement, and sends related hint information to the client. In another example, if there are unverified fuse-type SQL defense rules in the loaded SQL defense rules, the SQL engine selects one fuse-type SQL defense rule. If an SQL statement satisfies a fuse condition in the fuse-type SQL defense rule, the SQL engine stops executing the SQL statement, and returns related information to the client. If the SQL statement does not satisfy the fuse condition in the fuse-type SQL defense rule, the SQL engine continues executing the SQL statement until a task is completed.

It should be understood that, the fuse condition in the fuse-type SQL defense rule mainly focuses on systematic resources in all dimensions. For example, the systematic resources may include, but are not limited to, duration, consumed computing resources (a memory/CPU and the like), data access traffic, network transmission traffic, and the like.

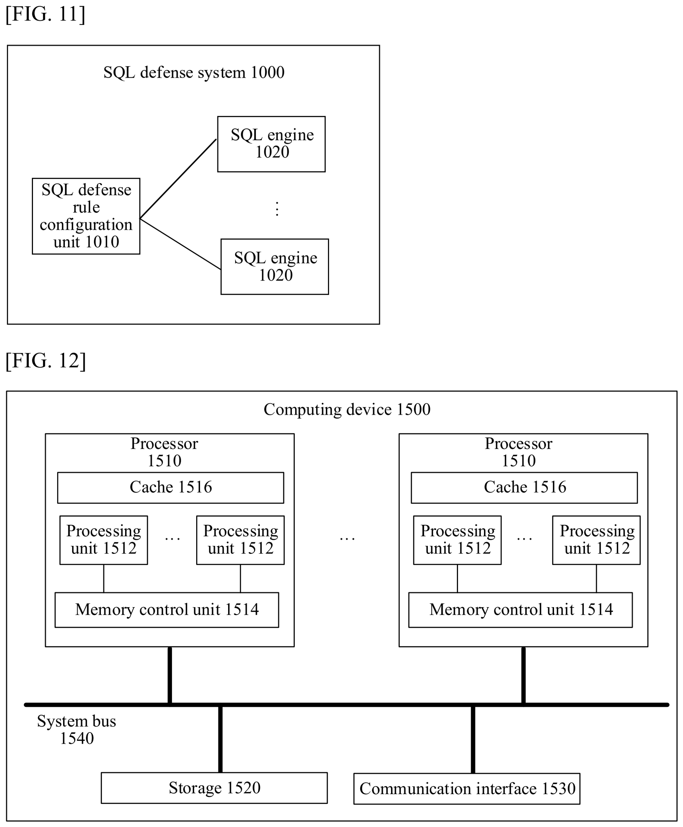

With reference to FIG. 1 to FIG. 10, the foregoing describes in detail the method provided in embodiments of this application. The following describes in detail system embodiments of this application with reference to FIG. 11 to FIG. 14. It should be understood that, descriptions of the method embodiments correspond to descriptions of the system embodiments. Therefore, for a part that is not described in detail, refer to the foregoing method embodiments.

FIG. 11 is a block diagram of an SQL defense system 1000 according to an embodiment of this application. The system 1000 may be implemented by using software, hardware, or a combination thereof. The system 1000 provided in this embodiment of this application may implement the method procedure shown in embodiments of this application. The system 1000 includes an SQL defense rule configuration unit 1010 and a plurality of SQL engines 1020. The SQL defense rule configuration unit 1010 is configured to configure corresponding SQL defense rules for the plurality of SQL engines through a unified entrance, where each SQL defense rule includes an effective SQL engine and a corresponding execution action, and the SQL defense rules corresponding to the plurality of SQL engines have a same format; and the SQL defense rule configuration unit 1010 is further configured to send each configured SQL defense rule to a corresponding SQL engine based on the effective SQL engine in each SQL defense rule, so that the SQL engine performs defense on a received SQL statement according to the obtained SQL defense rule.

Optionally, the system 1000 further includes a service layer. The plurality of SQL engines 1020 include a first SQL engine. The first SQL engine is configured to obtain at least one corresponding SQL defense rule from the SQL defense rule configuration unit, where the at least one SQL defense rule includes a first SQL defense rule; the first SQL engine is further configured to receive a first SQL statement from the service layer; and the first SQL engine is further configured to execute an action in the first SQL defense rule based on the first SQL statement satisfying the first SQL defense rule.

Optionally, the SQL defense rule configuration unit 1010 is specifically configured to automatically send each configured SQL defense rule to the corresponding SQL engine in a loading periodicity based on the effective SQL engine in each SQL defense rule.

Optionally, the SQL defense rule includes a hint-type SQL defense rule, an intercept-type SQL defense rule, or a fuse-type SQL defense rule.

Optionally, the first SQL defense rule is the hint-type SQL defense rule, and the first SQL engine is specifically configured to continue executing the first SQL statement.

Optionally, the first SQL engine is further configured to display hint information of the first SQL statement to a user.

Optionally, the first SQL defense rule is the intercept-type SQL defense rule or the fuse-type SQL defense rule, and the first SQL engine is specifically configured to stop executing the first SQL statement.

Optionally, the first SQL engine is further configured to display, to a user, a reason why execution of the first SQL statement is stopped.

Optionally, the first SQL engine automatically loads the at least one SQL defense rule in a loading periodicity.

Optionally, the SQL defense rule further includes an effective tenant list and a rule identifier ID.

The system 1000 herein may be implemented in a form of a functional module. The term "module" herein may be implemented in a form of software and/or hardware. This is not specifically limited.

For example, the "SQL defense rule configuration unit 1010" may be a software program, a hardware circuit, or a combination thereof that implements the foregoing functions. For example, the following uses the SQL defense rule configuration unit 1010 as an example to describe an implementation of the SQL defense rule configuration unit 1010. Similarly, for an implementation of another module, for example, the plurality of SQL engines 1020, refer to the implementation of the SQL defense rule configuration unit 1010.

The SQL defense rule configuration unit 1010 is used as an example of a software functional unit, and the SQL defense rule configuration unit 1010 may include code run on a computing instance. The computing instance may include at least one of a physical host (a computing device), a virtual machine, or a container. Further, there may be one or more computing instances. For example, the SQL defense rule configuration unit 1010 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. A communication gateway needs to be disposed in each VPC for cross-region communication between two VPCs in a same region and between VPCs in different regions, and interconnection between the VPCs is implemented through the communication gateway.

The SQL defense rule configuration unit 1010 is used as an example of a hardware functional unit, and the SQL defense rule configuration unit 1010 may include at least one computing device, for example, a server. Alternatively, the SQL defense rule configuration unit 1010 may be a device implemented by using an application-specific integrated circuit (application-specific integrated circuit, ASIC), a programmable logic device (programmable logic device, PLD), or the like. The PLD may be implemented by using a complex programmable logical device (complex programmable logical device, CPLD), a field programmable gate array (field programmable gate array, FPGA), a generic array logic (generic array logic, GAL), or any combination thereof.

A plurality of computing devices included in the SQL defense rule configuration unit 1010 may be distributed in a same region, or may be distributed in different regions. The plurality of computing devices included in the SQL defense rule configuration unit 1010 may be distributed in a same AZ, or may be distributed in different AZs. Similarly, the plurality of computing devices included in the SQL defense rule configuration unit 1010 may be distributed in a same VPC, or may be distributed in a plurality of VPCs. The plurality of computing devices may be any combination of computing devices such as a server, an ASIC, a PLD, a CPLD, an FPGA, and a GAL.

Therefore, modules in the examples described in embodiments of this application can be implemented by electronic hardware or a combination of computer software and electronic hardware. Whether the functions are performed by hardware or software depends on specific applications and design constraints of the technical solutions. A person skilled in the art may use different methods to implement the described functions for each specific application, but it should not be considered that such an implementation goes beyond the scope of this application.

It should be noted that, when the system provided in the foregoing embodiments performs the foregoing method, division of the foregoing functional modules is merely used as an example for description. During actual application, the foregoing functions may be allocated to different functional modules for implementation based on a requirement, that is, an internal structure of the system is divided into different functional modules to implement all or some of the functions described above.

In addition, the system provided in the foregoing embodiments and the method embodiments belongs to a same concept. For a specific implementation process thereof, refer to the foregoing method embodiments. Details are not described herein again.

The method provided in embodiments of this application may be performed by a computing device, and the computing device may also be referred to as a computer system. The computing device includes a hardware layer, an operating system layer running above the hardware layer, and an application layer running above the operating system layer. The hardware layer includes hardware, for example, a processing unit, a memory, and a memory control unit. Subsequently, functions and structures of the hardware are described in detail. The operating system is any one or more computer operating systems that implement service processing by using a process (process), for example, a Linux operating system, a Unix operating system, an Android operating system, an iOS operating system, or a Windows operating system. The application layer includes applications such as a browser, an address book, word processing software, and instant messaging software. In addition, optionally, the computer system is a handheld device, for example, a smartphone, or a terminal device, for example, a personal computer. This is not specifically limited in this application, provided that the method provided in embodiments of this application can be implemented. The method provided in embodiments of this application may be performed by the computing device or a functional module that is in the computing device and that can invoke and execute a program.

With reference to FIG. 12, the following describes in detail a computing device provided in embodiments of this application.

FIG. 12 is a diagram of an architecture of a computing device 1500 according to an embodiment of this application. The computing device 1500 may be a server, a computer, or another device having a computing capability. The computing device 1500 shown in FIG. 12 includes at least one processor 1510 and a storage 1520.

It should be understood that, a quantity of processors and a quantity of storages in the computing device 1500 are not limited in this application.

The processor 1510 executes instructions in the storage 1520, so that the computing device 1500 implements the method provided in this application. Alternatively, the processor 1510 executes the instructions in the storage 1520, so that the computing device 1500 implements functional modules provided in this application, to implement the method provided in this application.

Optionally, the computing device 1500 further includes a communication interface 1530. The communication interface 1530 implements communication between the computing device 1500 and another device or a communication network by using a transceiver module, for example, but not limited to a network interface card or a transceiver.

Optionally, the computing device 1500 further includes a system bus 1540. The processor 1510, the storage 1520, and the communication interface 1530 are separately connected to the system bus 1540. The processor 1510 can access the storage 1520 through the system bus 1540. For example, the processor 1510 can read and write data or execute code in the storage 1520 through the system bus 1540. The system bus 1540 is a peripheral component interconnect express (peripheral component interconnect express, PCI) bus, an extended industry standard architecture (extended industry standard architecture, EISA) bus, or the like. The system bus 1540 is classified into an address bus, a data bus, a control bus, or the like. For ease of representation, only one thick line is used for representing the bus in FIG. 12, but this does not mean that there is only one bus or only one type of bus.

In a possible implementation, a function of the processor 1510 is mainly to interpret instructions (or code) of a computer program and process data in computer software. The instructions of the computer program and the data in the computer software can be stored in the storage 1520 or a cache 1516.

Optionally, the processor 1510 may be an integrated circuit chip, and has a signal processing capability. By way of example but not limitation, the processor 1510 is a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The general-purpose processor is a microprocessor or the like. For example, the processor 1510 is a central processing unit (central processing unit, CPU).

Optionally, each processor 1510 includes at least one processing unit 1512 and a memory control unit 1514.

Optionally, the processing unit 1512 is also referred to as a core (core) or an internal core, and is a most important component of the processor. The processing unit 1512 is made of monocrystalline silicon in a specific production process. All computing, accept commands, storage commands, and data processing of the processor are executed by the core. The processing unit independently runs program instructions, and increases a running speed of a program by using a parallel computing capability. Various processing units have fixed logical structures. For example, the processing unit includes logical units such as a level 1 cache, a level 2 cache, an execution unit, an instruction level unit, and a bus interface.

In an implementation example, the memory control unit 1514 is configured to control data exchange between the storage 1520 and the processing unit 1512. Specifically, the memory control unit 1514 receives a memory access request from the processing unit 1512, and controls access to the memory based on the memory access request. By way of example but not limitation, the memory control unit is a component, for example, a memory management unit (memory management unit, MMU).

In an implementation example, each memory control unit 1514 performs addressing for the storage 1520 through the system bus. In addition, an arbiter (not shown in FIG. 12) is configured in the system bus, and the arbiter is responsible for processing and coordinating contention access of a plurality of processing units 1512.

In an implementation example, the processing unit 1512 and the memory control unit 1514 are in communication connection through a connection line, for example, an address line, inside a chip, to implement communication between the processing unit 1512 and the memory control unit 1514.

Optionally, each processor 1510 further includes the cache 1516, and the cache is a buffer for data exchange (referred to as a cache). When the processing unit 1512 needs to read data, the processing unit 1512 first searches the cache for required data. If the required data is found, the processing unit 1512 directly reads the data. If the required data is not found, the processing unit 1512 searches the storage for the required data. Because the cache runs much faster than the storage, a function of the cache is to help the processing unit 1512 run faster.

The storage 1520 can provide running space for a process in the computing device 1500. For example, the storage 1520 stores a computer program (specifically, code of the program) used for generating the process. After the computer program is run by the processor to generate the process, the processor allocates corresponding storage space to the process in the storage 1520. Further, the storage space further includes a text segment, an initialized data segment, an uninitialized data segment, a stack segment, a heap segment, and the like. The storage 1520 stores, in the storage space corresponding to the process, data generated during running of the process, for example, intermediate data or process data.

Optionally, the storage is also referred to as a memory, and a function of the storage is to temporarily store operational data in the processor 1510 and data exchanged with an external storage, for example, a hard disk. Provided that the computer runs, the processor 1510 schedules, to the memory for computing, data on which the computing needs to be performed, and then the processing unit 1512 transmits a result after the computing is completed.

By way of example but not limitation, the storage 1520 is a volatile memory or a non-volatile memory, or may include both a volatile memory and a non-volatile memory. The non-volatile memory is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM), and is used as an external cache. Through example but not limitative descriptions, many forms of RAMs may be used, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that, the storage 1520 of the system and the method described in this specification is intended to include, but is not limited to, these storages and any storage of another appropriate type.

The foregoing listed structure of the computing device 1500 is merely an example for description, and this application is not limited thereto. The computing device 1500 in this embodiment of this application includes various types of hardware in a computer system in a conventional technology. For example, the computing device 1500 further includes a storage other than the storage 1520, for example, a magnetic disk storage. A person skilled in the art should understand that, the computing device 1500 may further include another component required for implementing normal running. In addition, a person skilled in the art should understand that, based on a specific requirement, the computing device 1500 may further include a hardware component implementing other additional functions. Furthermore, a person skilled in the art should understand that, the computing device 1500 may alternatively include only a component required for implementing embodiments of this application, and does not necessarily include all components shown in FIG. 12.

An embodiment of this application further provides a computing device cluster. The computing device cluster includes at least one computing device. The computing device may be a server. In some embodiments, the computing device may alternatively be a terminal device, for example, a desktop computer, a notebook computer, or a smartphone.

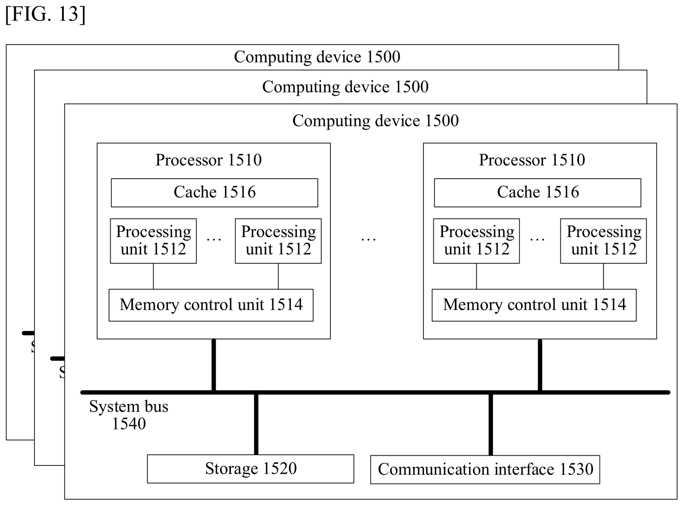

As shown in FIG. 13, the computing device cluster includes at least one computing device 1500. Storages 1520 in one or more computing devices 1500 in the computing device cluster may store same instructions used for performing the foregoing method.

In some possible implementations, the storages 1520 in the one or more computing devices 1500 in the computing device cluster may alternatively store some instructions used for performing the foregoing method separately. In other words, a combination of the one or more computing devices 1500 may jointly execute the instructions of the foregoing method.

It should be noted that, storages 1520 in different computing devices 1500 in the computing device cluster may store different instructions respectively used for performing some functions of the foregoing system. In other words, the instructions stored in the storages 1520 in the different computing devices 1500 may implement functions of one or more modules in the foregoing system.

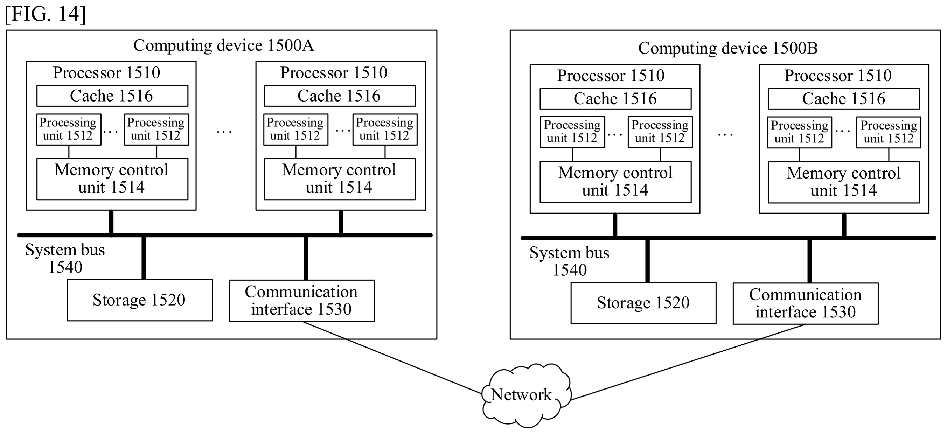

In some possible implementations, the one or more computing devices in the computing device cluster may be connected via a network. The network may be a wide area network, a local area network, or the like. FIG. 14 shows a possible implementation. As shown in FIG. 14, two computing devices 1500A and 1500B are connected via a network. Specifically, each computing device is connected to the network through a communication interface in the computing device.

It should be understood that, a function of the computing device 1500A shown in FIG. 14 may alternatively be completed by a plurality of computing devices 1500. Similarly, a function of the computing device 1500B may alternatively be completed by a plurality of computing devices 1500.

In the embodiments, a computer program product including instructions is further provided. The computer program product may be software or a program product that includes the instructions and that can run on a computing device or that can be stored in any usable medium. When the computer program product runs on a computing device, the computing device is caused to perform the method provided above, or the computing device is caused to implement a function of the system provided above.

In the embodiments, a computer-readable storage medium is further provided. The computer-readable storage medium may be any usable medium that can be stored by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. When the instructions in the computer-readable storage medium are executed on a computing device, the computing device is caused to perform the method provided above.

It should be understood that, sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with examples described in embodiments disclosed in this specification, units and algorithm steps can be implemented by electronic hardware or a combination of computer software and electronic hardware. Whether the functions are performed by hardware or software depends on specific applications and design constraints of the technical solutions. A person skilled in the art may use different methods to implement the described functions for each specific application, but it should not be considered that such an implementation goes beyond the scope of this application.

It may be clearly understood by a person skilled in the art that, for the purpose of convenient and brief description, for a specific working process of the foregoing systems and units, refer to a corresponding process in the foregoing method embodiments. Details are not described herein again.

In several embodiments provided in this application, it should be understood that, the disclosed system and methods may be implemented in other manners. For example, the system embodiments described above are merely examples. For example, division of the units is merely logical function division. During an actual implementation, there may be another division manner. For example, a plurality of units or components may be combined or integrated into another system, or some features may be ignored or not performed. In addition, displayed or discussed mutual couplings or direct couplings or communication connections may be implemented through some interfaces. The indirect couplings or communication connections between the systems or units may be implemented in electronic, mechanical, or other forms.

Units described as separate components may or may not be physically separate, and components displayed as units may or may not be physical units, to be specific, may be located in one place, or may be distributed on a plurality of network units. Some or all of the units may be selected based on an actual requirement to achieve the objectives of the solutions in embodiments.

In addition, functional units in embodiments of this application may be integrated into one processing unit, each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A structured query language SQL defense method, wherein the method is applied to an SQL defense system, the SQL defense system comprises an SQL defense rule configuration unit and a plurality of SQL engines, and the method comprises:
configuring, by the SQL defense rule configuration unit, corresponding SQL defense rules for the plurality of SQL engines through a unified entrance, wherein each SQL defense rule comprises an effective SQL engine and a corresponding execution action, and the SQL defense rules corresponding to the plurality of SQL engines have a same format; and
sending, by the SQL defense rule configuration unit, each configured SQL defense rule to a corresponding SQL engine based on the effective SQL engine in each SQL defense rule, so that the SQL engine performs defense on a received SQL statement according to the obtained SQL defense rule.

2. The method according to claim 1, wherein the plurality of SQL engines comprise a first SQL engine, and the method further comprises:
obtaining, by the first SQL engine, at least one corresponding SQL defense rule from the SQL defense rule configuration unit, wherein the at least one SQL defense rule comprises a first SQL defense rule;
receiving, by the first SQL engine, a first SQL statement from a service layer; and
executing, by the first SQL engine, an action in the first SQL defense rule based on the first SQL statement satisfying the first SQL defense rule.

3. The method according to claim 1 or 2, wherein sending, by the SQL defense rule configuration unit, each configured SQL defense rule to the corresponding SQL engine based on the effective SQL engine in each SQL defense rule comprises:
automatically sending, by the SQL defense rule configuration unit, each configured SQL defense rule to the corresponding SQL engine in a loading periodicity based on the effective SQL engine in each SQL defense rule.

4. The method according to any one of claims 1 to 3, wherein the SQL defense rule comprises a hint-type SQL defense rule, an intercept-type SQL defense rule, or a fuse-type SQL defense rule.

5. The method according to claim 4, wherein the first SQL defense rule is the hint-type SQL defense rule, and
executing, by the first SQL engine, the action in the first SQL defense rule comprises:
continuing, by the first SQL engine, executing the first SQL statement.

6. The method according to claim 5, wherein the method further comprises:
displaying, by the first SQL engine, hint information of the first SQL statement to a user.

7. The method according to claim 4, wherein the first SQL defense rule is the intercept-type SQL defense rule or the fuse-type SQL defense rule, and
executing, by the first SQL engine, the action in the first SQL defense rule comprises:
stopping, by the first SQL engine, executing the first SQL statement.

8. The method according to claim 7, wherein the method further comprises:
displaying, by the first SQL engine to a user, a reason why execution of the first SQL statement is stopped.

9. The method according to any one of claims 1 to 8, wherein the SQL defense rule further comprises an effective tenant list and a rule identifier ID.

10. A structured query language SQL defense system, wherein the system comprises an SQL defense rule configuration unit and a plurality of SQL engines;
the SQL defense rule configuration unit is configured to configure corresponding SQL defense rules for the plurality of SQL engines through a unified entrance, wherein each SQL defense rule comprises an effective SQL engine and a corresponding execution action, and the SQL defense rules corresponding to the plurality of SQL engines have a same format; and
the SQL defense rule configuration unit is further configured to send each configured SQL defense rule to a corresponding SQL engine based on the effective SQL engine in each SQL defense rule, so that the SQL engine performs defense on a received SQL statement according to the obtained SQL defense rule.

11. The system according to claim 10, wherein the plurality of SQL engines comprise a first SQL engine;
the first SQL engine is configured to obtain at least one corresponding SQL defense rule from the SQL defense rule configuration unit, wherein the at least one SQL defense rule comprises a first SQL defense rule;
the first SQL engine is further configured to receive a first SQL statement from a service layer; and
the first SQL engine is further configured to execute an action in the first SQL defense rule based on the first SQL statement satisfying the first SQL defense rule.

12. The system according to claim 10 or 11, wherein the SQL defense rule configuration unit is specifically configured to:
automatically send each configured SQL defense rule to the corresponding SQL engine in a loading periodicity based on the effective SQL engine in each SQL defense rule.

13. The system according to any one of claims 10 to 12, wherein the SQL defense rule comprises a hint-type SQL defense rule, an intercept-type SQL defense rule, or a fuse-type SQL defense rule.

14. The system according to claim 13, wherein the first SQL defense rule is the hint-type SQL defense rule, and
the first SQL engine is specifically configured to continue executing the first SQL statement.

15. The system according to claim 14, wherein
the first SQL engine is further configured to display hint information of the first SQL statement to a user.

16. The system according to claim 13, wherein the first SQL defense rule is the intercept-type SQL defense rule or the fuse-type SQL defense rule, and
the first SQL engine is specifically configured to stop executing the first SQL statement.

17. The system according to claim 16, wherein
the first SQL engine is further configured to display, to a user, a reason why execution of the first SQL statement is stopped.

18. The system according to any one of claims 10 to 17, wherein the SQL defense rule further comprises an effective tenant list and a rule identifier ID.

19. A computing device cluster, comprising at least one computing device, wherein each computing device comprises a processor and a storage; and
a processor of the at least one computing device is configured to execute instructions stored in a storage of the at least one computing device, to cause the computing device cluster to perform the method according to any one of claims 1 to 9.

20. A computer program product comprising instructions, wherein when the instructions are run by a computing device cluster, the computing device cluster is caused to perform the method according to any one of claims 1 to 9.

21. A computer-readable storage medium, comprising computer program instructions, wherein when the computer program instructions are executed by a computing device cluster, the computing device cluster performs the method according to any one of claims 1 to 9.
